# FASCICULE DE BREVET EUROPEEN

(11) **EP 3 329 175 B1**
(45) Date de publication et mention de la délivrance du brevet: **23.09.2020**
(21) Numéro de dépôt: 16757286.6
(22) Date de dépôt: 20.07.2016
(51) Int. Cl.: F17C 13/02, F17D 3/00

(54) **ECRAN TACTILE PIVOTANT POUR INSTALLATION DE DISTRIBUTION DE GAZ**
SCHWENKBARER BERÜHRUNGSBILDSCHIRM FÜR EINE GASVERTEILUNGSANLAGE
PIVOTABLE TOUCHSCREEN FOR A GAS-DISTRIBUTION FACILITY

(30) Priorité: 31.07.2015 FR 1557386
(43) Date de publication de la demande: 06.06.2018
(73) Titulaire: L'Air Liquide Société Anonyme pour l'Etude et l'Exploitation des Procédés Georges Claude, 75007 Paris (FR); Air Liquide Electronics Systems, 75007 Paris (FR)
(72) Inventeur: OUERD, Aziz, 38100 Grenoble (FR); DULPHY, Hervé, 38560 Jarrie (FR); DOS REIS, Henrique, 38210 Polienas (FR)
(74) Mandataire: Debecker, Isabelle Virginie
(86) Numéro de dépôt international: PCT/FR2016/051877
(87) Numéro de publication internationale: WO 2017/021616

(56) Documents cités:
- EP-A1- 0 926 429
- US-A1- 2008 055 491

## Description

L'invention est relative à un dispositif de distribution d'un gaz de travail et à une installation de fourniture de tels gaz, utilisés pour amener les gaz mis en œuvre dans les procédés de différentes industries telles que les industries du semi-conducteur, du photovoltaïque, des LED, des écrans plats ou toute autre industrie comme les industries minières ou pharmaceutiques, de la bouteille à l'équipement ou réacteur utilisé pour ces procédés.

La mise en œuvre de ces procédés nécessite souvent l'utilisation de gaz dangereux de haute qualité réclamant par exemple des purges automatiques et une distribution continue. Par exemple, la fabrication de circuits électroniques nécessite l'utilisation de divers gaz dits "de travail" comme par exemple Cl₂, NH₃, HCI, HBr, NF₃ ou WF₆ etc. qui sont considérés pour la plupart comme dangereux pour l'homme du fait de leur toxicité et/ou de leur inflammabilité.

C'est pourquoi ces gaz sont stockés dans des bouteilles de gaz sous pression disposées par deux dans des installations de fourniture de gaz, également connues au nom de "gas cabinets". Une telle installation comprend une enceinte de sécurité sous extraction contrôlée et un dispositif de distribution du gaz de travail disposé dans l'enceinte.

Le dispositif de distribution comprend un ensemble de canalisations de fourniture de gaz, de purge et d'extraction, relié aux deux bouteilles de gaz sous pression, des vannes disposées dans les canalisations pour réguler le flux du gaz de travail, ainsi que des détecteurs de fuites de gaz et des capteurs de mesure des pressions régnant dans les canalisations pour la surveillance de l'état de fonctionnement de l'installation.

La régulation des vannes ainsi que le relevé et l'exploitation des divers signaux en provenance des détecteurs de fuite et des capteurs de pression sont assurés par une unité de contrôle-commande.

Cette unité de contrôle-commande comprend par exemple un automate programmé et, relié à celui-ci, un tableau d'affichage et de commande.

Sur ce tableau est dessiné un schéma synoptique de l'installation.

Pour signaler des alarmes à un opérateur chargé de la surveillance de l'installation, une multitude de voyants lumineux, associés chacun à une alarme spécifique, sont disposés dans le tableau. De plus, des interrupteurs de commande des vannes permettant un fonctionnement en mode manuel de l'installation sont également installés dans ce tableau. En outre, divers afficheurs montés dans le tableau et commandés par l'automate montrent les valeurs de mesure relevées par les capteurs.

Du fait des nombreux voyants, interrupteurs et afficheurs, le tableau d'affichage et de commande semble au premier abord compliqué et peu convivial, de sorte qu'un apprentissage assez long est nécessaire pour former un opérateur chargé de la surveillance de l'installation.

L'invention vise à pallier cet inconvénient en proposant un dispositif de distribution équipé d'une interface d'affichage et de commande plus conviviale d'une part.

D'autre part, ces installations sont en général munies d'une porte permettant à l'opérateur d'accéder à l'intérieur de l'enceinte et ainsi manipuler les bouteilles de gaz et/ou les différents éléments disposés dans ladite enceinte. Une fois la porte ouverte, l'opérateur n'a plus accès aux éléments présentés sur la face avant de la porte tels que les interrupteurs et afficheurs, et le tableau d'affichage et de commande. Cela constitue un inconvénient majeur pour l'opérateur dans son utilisation de l'installation

A cet effet, l'invention a pour objet une installation de fourniture d'un gaz de travail munie d'une enceinte d'isolation et d'une porte pivotant autour d'un axe vertical pour permettre l'ouverture et la fermeture de ladite enceinte, comprenant au moins une source d'un gaz de travail sous pression, disposée dans l'enceinte d'isolation, et comprenant un dispositif de distribution d'un gaz de travail, comprenant un ensemble de canalisations, relié à au moins une source de gaz de travail et à au moins une canalisation de sortie pour acheminer le gaz de travail vers un poste de consommation, des organes fonctionnels, notamment des vannes disposées dans les canalisations et servant à réguler le flux du gaz de travail dans celles-ci, ainsi que des détecteurs de fuites de gaz, et une unité de contrôle-commande comprenant des moyens de communication avec lesdits organes fonctionnels, des moyens de contrôle de tâches relatives auxdits organes fonctionnels, et des moyens de pilotage des moyens de contrôle, actionnables par un opérateur du dispositif de distribution, lesdits moyens de pilotage comprenant un écran tactile présentant des zones de commande associées au contrôle de tâches correspondantes, caractérisée en ce que ledit écran tactile est fixé sur un boitier intégré dans la porte, ledit boitier étant apte à et conçu pour pivoter autour d'un axe vertical.

Le boitier pivotant permet l'accès, à l'opérateur intervenant sur les bouteilles ou autres composants, à l'écran tactile et éventuellement à un bouton d'arrêt, lorsque la porte est fermée, depuis l'extérieur de l'armoire et lorsque la porte est ouverte, depuis l'intérieur de l'installation qui a par exemple la forme d'une armoire.

Le dispositif de distribution selon l'invention peut de plus comporter une ou plusieurs des caractéristiques suivantes :
- l'écran tactile comprend pour au moins une zone principale de commande au moins une zone secondaire de commande, associée à ladite au moins une zone principale et relative à une instruction pour le contrôle de la tâche correspondant à ladite au moins une zone principale de commande ladite au moins une zone secondaire de commande étant délimitée par un graphique associé à ladite instruction et affiché sur ledit écran tactile seulement en cas d'activation de ladite zone principale de commande correspondante par un opérateur,
- l'écran tactile comprend une première région réservée exclusivement auxdites zones principales de commande et une deuxième région distincte de ladite première région et destinée auxdites zones secondaires de commande,
- l'écran tactile comprend en outre une troisième région distincte desdites première et seconde régions, et réservée à l'affichage d'une information relative à une zone principale de commande, activée par un opérateur,
- les moyens de pilotage comprennent de plus des moyens de signalisation, sur l'écran tactile, d'une zone de commande activée par un opérateur,
- une tâche contrôlée par les moyens de contrôle est relative à la gestion et notamment à l'affichage sur l'écran tactile des alarmes détectées par les organes fonctionnels, et une des zones principales de commande de l'écran tactile est une zone d'activation de l'affichage des alarmes relevées,
- dans le cas où le dispositif est muni de capteurs de mesure, notamment des pressions régnant dans les canalisations, une tâche contrôlée par les moyens de contrôle est relative à l'évaluation des valeurs de mesure relevées par lesdits capteurs de mesure et à l'affichage de celles-ci sur l'écran tactile, et une desdites zones principales de commande est une zone d'activation de l'affichage sur l'écran tactile des valeurs de mesure relevées,
- dans le cas où le dispositif est muni de capteurs de mesure, notamment des pressions régnant dans les canalisations, les moyens de pilotage comprennent des moyens de mémorisation d'un schéma synoptique représentant notamment l'ensemble des canalisations du dispositif de distribution du gaz de travail et les vannes disposées dans celles-ci, une tâche contrôlée par les moyens de contrôle est relative à l'évaluation des valeurs de mesure relevées par lesdits capteurs et à l'affichage conjoint sur l'écran tactile du schéma synoptique du dispositif de distribution, enregistré dans lesdits moyens de mémorisation, et desdites valeurs de mesure relevées par les capteurs, et une desdites zones principales de commande est une zone d'activation de l'affichage sur l'écran tactile du schéma synoptique avec les valeurs de mesure relevées.

Alternativement, l'écran présente uniquement une vue de synthèse qui comprend les capteurs de pression et l'état binaire de la distribution. Ce type d'écran simplifié présente une taille réduite et donc diminue l'encombrement.

De plus, l'invention a pour objet une installation de distribution d'un gaz de travail, caractérisée en ce qu'elle comprend un premier et un second dispositifs de distribution d'un gaz de travail tels que définis ci-dessus, disposés en parallèle et dont les unités de contrôle-commande sont en communication entre elles, en ce que le second dispositif est un organe fonctionnel vis-à-vis du premier dispositif, en ce qu'une tâche des moyens de contrôle du premier dispositif est relative à la surveillance de l'état de fonctionnement du second dispositif, considéré comme organe fonctionnel, et en ce qu'une desdites zones principales de commande de l'écran tactile du premier dispositif est une zone d'activation de l'affichage sur l'écran tactile du premier dispositif d'informations sur l'état de fonctionnement du second dispositif. L'installation de distribution du gaz de travail peut de plus comporter la caractéristique suivante :
- dans le cas où le second dispositif de distribution est muni de capteurs de mesure, notamment des pressions régnant dans ses canalisations, les moyens de pilotage du premier dispositif de distribution comprennent des moyens de mémorisation d'un schéma synoptique représentant notamment l'ensemble des canalisations du second dispositif de distribution du gaz de travail et les vannes disposées dans celles-ci, une tâche contrôlée par les moyens de contrôle du premier dispositif de distribution est relative à l'évaluation des valeurs de mesure relevées par les capteurs du second dispositif de distribution et à l'affichage sur l'écran tactile du premier dispositif de distribution du schéma synoptique du second dispositif de distribution, conjointement avec lesdites valeurs de mesure relevées par les capteur du second dispositif de distribution, et une desdites zones principales de commande de l'écran tactile du premier dispositif est une zone d'activation de l'affichage sur l'écran tactile du premier dispositif de distribution du schéma synoptique du second dispositif de distribution avec les valeurs de mesure relevées par lesdits capteurs de mesure du second dispositif.

Alternativement, l'écran présente uniquement une vue de synthèse qui comprend les capteurs de pression et l'état binaire de la distribution. Ce type d'écran simplifié présente une taille réduite et donc diminue l'encombrement.

De plus, l'invention a pour objet une installation de fourniture d'un gaz de travail, comprenant au moins une source d'un gaz de travail sous pression, disposée dans une enceinte d'isolation, caractérisée en ce qu'elle comprend un dispositif de distribution tel que défini ci-dessus, relié à ladite au moins une source et disposé dans ladite enceinte d'isolation, et en ce que l'écran tactile du dispositif de distribution est intégré dans la paroi externe de ladite enceinte.

L'installation de fourniture du gaz de travail peut de plus comporter une ou plusieurs des caractéristiques suivantes :
- dans le cas où ladite source est une bouteille de gaz, une tâche contrôlée par lesdits moyens de contrôle du dispositif de distribution est relative aux commandes des cycles de purge des canalisations avant et après chaque remplacement d'une bouteille vide par une bouteille pleine, et une desdites zones principales de commande de l'écran tactile est une zone d'activation des commandes des vannes en vue de l'activation des cycles de purge,
- dans le cas où l'installation comprend une première et une seconde sources de gaz de travail reliées au dispositif de distribution et destinées à alimenter de façon alternative ledit dispositif de distribution, une tâche contrôlée par lesdits moyens de contrôle du dispositif de distribution est relative aux commandes du basculement d'une alimentation du dispositif de distribution par la première source vers une alimentation par la seconde source, et une desdites zones principales de commande de l'écran tactile est une zone d'activation des commandes des vannes en vue dudit basculement.

Installation telle que définie ci-dessus, caractérisée en ce que les moyens de pilotage sont aptes à et conçus pour être commandés à distance au moyen d'une connexion WIFI par une tablette, un téléphone intelligent ou un ordinateur portable ayant un écran présentant au moins les zones de commande telles que définies dans les revendications précédentes.

Installation telle que définie ci-dessus, caractérisée en ce qu'un bouton d'arrêt d'urgence est fixé audit boitier, ledit boitier étant situé à une hauteur inférieure à 1,70 m en partant du sol.

Installation telle que définie ci-dessus, caractérisée en ce que la taille de l'écran tactile est inférieure à 12 pouces, de préférence inférieure à 6 pouces.

D'autres caractéristiques et avantages de l'invention ressortiront de la description suivante, donnée à titre d'exemple, sans caractère limitatif, en regard des dessins annexés sur lesquels :
- La figure 1 est une vue schématique en perspective d'une installation de fourniture d'un gaz de travail équipée d'un dispositif de distribution de ce gaz selon l'invention,
- La figure 2 est un schéma des canalisations du dispositif de distribution du gaz de travail monté dans l'installation de la figure 1,
- La figure 3 est un schéma synoptique d'une unité de contrôle commande du dispositif de distribution selon l'invention,
- La figure 4 est un schéma de l'écran tactile du dispositif selon l'invention,
- La figure 5 est un premier exemple d'un affichage sur l'écran tactile,
- La figure 6 est un deuxième exemple d'un affichage sur l'écran tactile,
- La figure 7 est un troisième exemple d'un affichage sur l'écran tactile,
- La figure 8 est un quatrième exemple d'un affichage sur l'écran tactile, et
- La figure 9 est une vue du boitier supportant l'écran tactile lorsque la porte de l'installation est fermée.
- La figure 10 est une vue du boitier supportant l'écran tactile lorsque la porte de l'installation est ouverte.

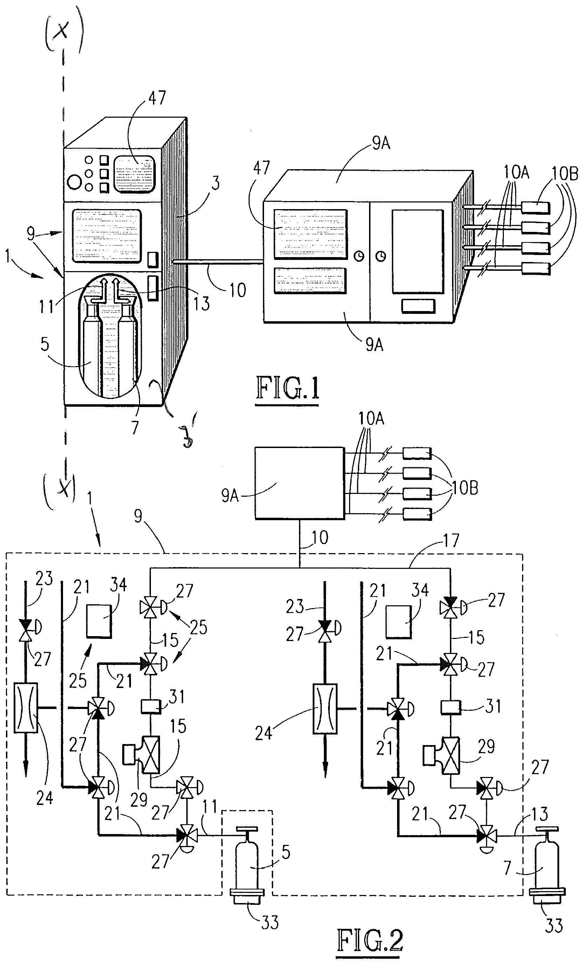

La figure 1 montre, selon une vue schématique en perspective avec un arrachement au niveau de sa partie inférieure, une installation de fourniture 1 d'un gaz de travail destinée à alimenter un ou plusieurs postes de consommation de ces gaz.

Cette installation 1 comprend une enceinte d'isolation 3 dans laquelle sont installés d'une part, comme on peut le voir sur la figure grâce à l'arrachement, deux bouteilles 5 et 7 d'un gaz de travail sous pression, et, d'autre part, un dispositif 9 de distribution du gaz de travail dont les canalisations 11 et 13 reliées respectivement aux bouteilles 5 et 7 sont visibles sur cette figure. Cette installation 1 comporte également une porte 3' pivotant autour d'un axe vertical (X) pour permettre l'ouverture et la fermeture de ladite enceinte 3.

L'installation 1 est raccordée par sa canalisation de sortie 10 à un second dispositif de distribution 9A du gaz de travail servant à fournir le gaz de travail par l'intermédiaire de ses canalisations de sortie 10A à plusieurs postes de consommation 10B à la fois.

Ainsi que l'on voit sur la figure 2, le dispositif 9 de distribution du gaz de travail de l'installation 1 comporte un ensemble de canalisations comprenant en particulier pour chaque bouteille 5 et 7 une canalisation principale 15 reliée par l'intermédiaire d'une canalisation 17 commune à la canalisation de sortie 10 pour acheminer le gaz de travail vers les postes de consommation 10B, des canalisations 21 de purge et des canalisations 23 d'extraction de gaz pour obtenir un vide partiel dans l'enceinte 3 grâce à l'activation d'un générateur de vide 24.

Afin de pouvoir réguler les divers flux de gaz dans les diverses canalisations et de surveiller l'état de fonctionnement du dispositif de distribution 9, ce dernier comprend des organes fonctionnels 25 tels que des vannes d'arrêt 27 et des vannes de régulation 29 disposées dans les diverses canalisations 15, 17, 21 et 23, des capteurs 31 de mesure des pressions régnant notamment dans les canalisations principales 15, des balances 33 de pesage des bouteilles 5 et 7 permettant de déterminer le niveau de remplissage des bouteilles dans le cas où celles-ci sont remplies d'un gaz liquéfié, ou encore des détecteurs 34 de fuites de gaz, disposés dans l'enceinte 3 de l'installation.

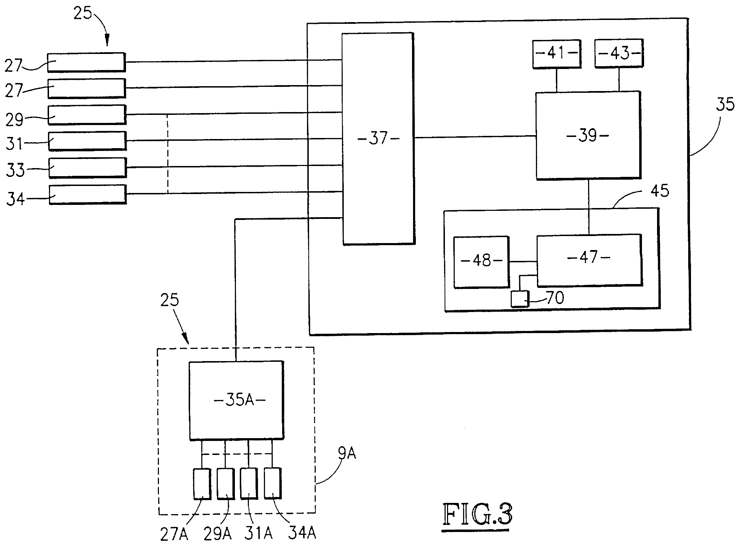

Comme on le voit sur le schéma de la figure 3, ces organes fonctionnels 25 sont tous reliés à une unité 35 de contrôle-commande. Cette unité 35 de contrôle-commande des organes fonctionnels 25 comprend des moyens 37 de communication avec ces organes fonctionnels 25 et, reliés à ces moyens 37, des moyens 39 de contrôle de différentes tâches relatives aux organes fonctionnels 25, ces tâches étant mémorisées dans une mémoire 41 de tâches.

De telles tâches concernent par exemple la comparaison des valeurs de mesure relevées par les capteurs 31 et I ou par les balances 33 avec des valeurs de seuil prédéfinies et enregistrées dans une mémoire 43 de seuils, la génération d'un signal d'alarme si une des valeurs mesurées dépasse le seuil associé et, éventuellement, selon le niveau de priorité prédéfini de l'alarme, un arrêt partiel ou complet de l'installation 1. Dans ce cas, les moyens 39 commandent par l'intermédiaire des moyens 37 de communication la fermeture des certaines vannes de l'installation.

Une autre tâche concerne par exemple la commande des vannes 27 et 29 lorsque par exemple la bouteille 5 alimentant le dispositif 9 est pratiquement vide et on doit procéder à un basculement de l'alimentation du dispositif de distribution 9 par la bouteille 7 ou vice versa.

Encore une autre tâche est relative à la détection de fuites de gaz par l'intermédiaire des détecteurs 34 et, en cas de détection d'une telle fuite, à la génération d'un signal d'alarme et à un arrêt partiel ou complet de l'installation 1.

Par ailleurs, un organe fonctionnel 25 particulier auquel est associée une tâche spéciale, est formé par le second dispositif de distribution 9A dont seule l'unité de contrôle-commande 35A et des organes fonctionnels 25A reliés à cette unité 35A sont représentés sur la figure 3. Etant donné que la structure du dispositif 9A est similaire à celle du dispositif 9 dans ce sens qu'il comprend aussi un ensemble de canalisations, et des organes fonctionnels 25A tels que des vannes 27A et 29A disposées dans ses canalisations pour réguler le flux du gaz de travail, des capteurs 31A de mesure des pressions régnant dans les canalisations et des détecteurs 34A de fuites de gaz, l'agencement particulier des canalisations et des vannes ne sera pas décrit plus en détail.

Toutefois, il est à noter que l'unité de contrôle-commande 35A du dispositif 9A est identique à l'unité de contrôle-commande 35 du dispositif 9 de distribution.

Comme cela est représenté sur la figure 3, l'unité de contrôle-commande 35A est reliée aux moyens 37 de communication de l'unité 35.

Une tâche spéciale contrôlée par les moyens 39 par l'intermédiaire des moyens 37 est relative à la surveillance de l'état de fonctionnement du dispositif 9A.

En particulier, les valeurs de pression mesurées par l'intermédiaire des capteurs 31A et des éventuelles fuites détectées par les détecteurs 34A, sont transmises aux moyens de contrôle 39.

Les diverses tâches peuvent être contrôlées par les moyens 39 aussi bien en parallèle que successivement, ou seulement sur détection d'un événement comme par exemple la détection d'une alarme.

De plus, l'unité 35 de contrôle-commande comprend des moyens 45 de pilotage des moyens 39 de contrôle, permettant à un opérateur par exemple l'activation d'une tâche, ou de choisir et de définir certains paramètres nécessaires au contrôle d'une tâche.

A cet effet, les moyens de pilotage 45 comprennent un écran tactile 47 et des moyens 48 de mémorisation de schémas ou de graphiques destinés à être affichés sur l'écran tactile 47.

Ainsi que l'on voit sur la figure 1, l'écran tactile 47 est intégré dans la paroi externe de la partie supérieure de l'enceinte 3 de l'installation 1 afin qu'il soit bien visible et accessible pour un opérateur chargé de la surveillance de l'installation.

Avantageusement, l'écran 47 est intégré dans la porte de l'enceinte.

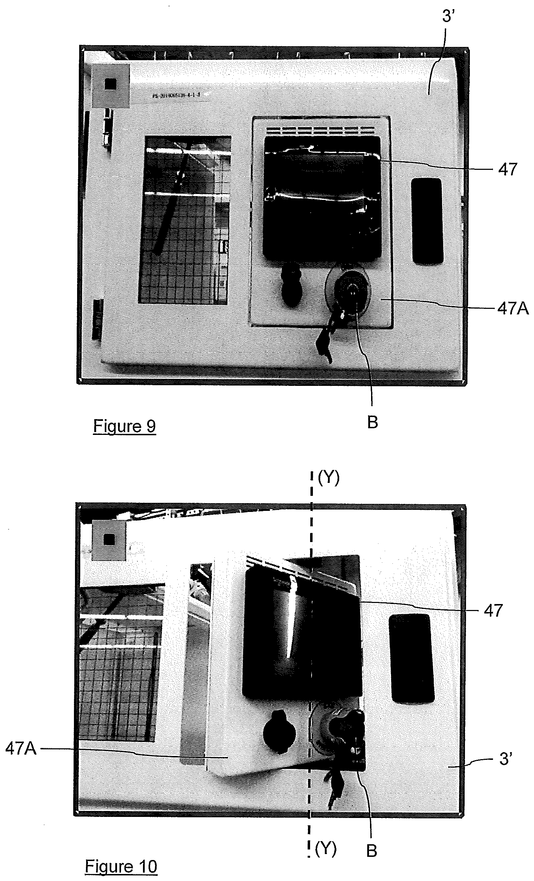

Ainsi que l'on voit sur la figure 9, l'écran tactile 47 est fixé sur un boitier 47A intégré dans la paroi externe de la partie supérieure de l'enceinte 3 de l'installation 1. Lorsque la porte 3' est fermée, le boitier est dans le même plan que ladite porte. Par conséquent, l'opérateur se place en face de l'installation 1 pour lire et accéder à l'écran tactile 47.

Ainsi que l'on voit sur la figure 10, lorsque la porte 3' est ouverte, le boitier 47A pivote autour d'un axe (Y) vertical. Ainsi, lorsque l'opérateur accède à l'intérieur de l'enceinte 3, l'écran tactile 47 est accessible même lorsque la porte est ouverte.

Sur ces figures 9 et 10, on voit également un bouton d'arrêt d'urgence B fixé sur le boitier 47A pivotant.

Un dispositif de connexion pour relier les informations de l'automate (39) vers l'extérieur (Outil de maintenance, supervision...) peut-être intégré. Ainsi qu'une clé pour passer en mode maintenance.

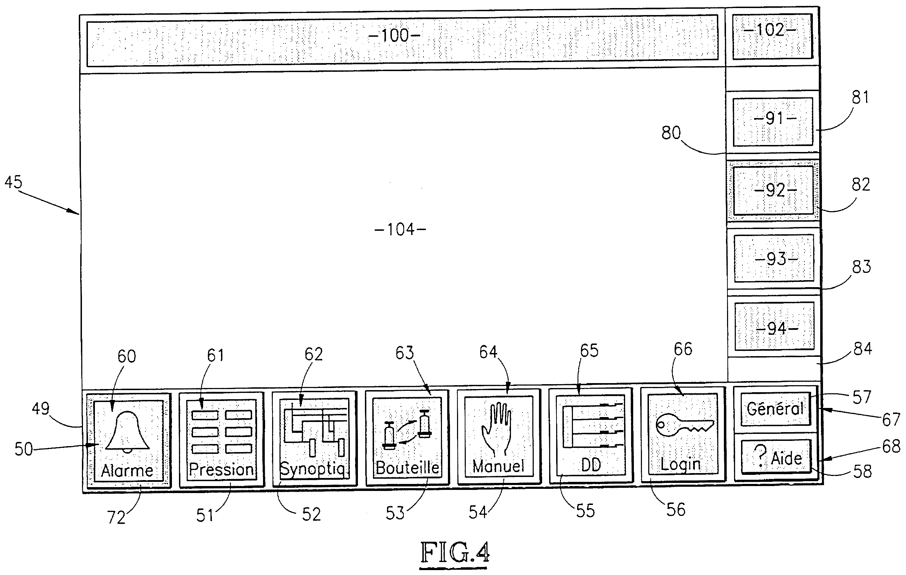

Un exemple d'écran tactile pouvant être utilisé selon la présente invention est représenté plus en détail à la figure 4.

En référence à cette figure 4, l'écran tactile 47 comprend en bas une première région 49 dans laquelle sont affichés en permanence des graphiques 50, 51, 52, 53, 54, 55, 56, 57 et 58. Chaque graphique 50 à 58 délimite sur l'écran tactile 47 une zone principale de commande associée, portant respectivement les numéros de référence 60 à 68, c'est-à-dire des zones au moyen desquelles un opérateur chargé de la surveillance de l'installation 1 entre, par un contact avec son doigt sur l'écran tactile 47, une commande relative à une tâche prédéterminée dans les moyens de pilotage 45.

Cette première région 49 est strictement réservée à ces zones 60 à 68 principales de commande avec les graphiques 50 à 58 associés, affichés en permanence. Ces zones 60 à 68 de commande principale sont en permanence réceptives à recevoir une commande de la part de l'opérateur. Cela est particulièrement avantageux lorsque les moyens 39 contrôlent différentes tâches en parallèles, car l'opérateur peut accéder au pilotage d'une tâche par une simple activation de la zone principale de commande associée à celle-ci.

Pour certaines tâches spécifiques, il est nécessaire de donner à l'opérateur la possibilité de choisir ou d'entrer, après l'activation de la zone principale correspondante, un paramètre ou une instruction de commande relative à cette tâche spécifique.

A cet effet, l'écran tactile 47 comprend de plus sur sa droite, vu sur la figure 4, une deuxième région 80 distincte de la première région 49, dans laquelle sont affichés, en fonction de la tâche activée, des graphiques 81, 82, 83, et 84, représentés sur cette figure seulement par des cadres. Ces graphiques 81 à 84 délimitent des zones de commandes secondaires portant respectivement les numéros de référence 91 à 94. Ces zones de commandes secondaires permettent à l'opérateur différentes opérations relatives à la tâche spécifique activée.

Bien entendu, les graphiques 81 à 84 et ainsi les opérations que l'opérateur peut entrer dans les moyens de pilotage 45 changent en fonction de la zone de commande principale et ainsi de la tâche activées.

Par ailleurs, comme on le voit sur la figure 3, les moyens de pilotage comprennent de plus des moyens de signalisation 70, sur l'écran tactile 47, d'une zone principale ou secondaire de commande activée par un opérateur. Ainsi que cela est représenté sur la figure 4, les moyens de signalisation 70 provoquent, suite à l'activation d'une zone de commande, par exemple l'activation de la zone 60, l'affichage sur l'écran tactile 47 par exemple d'un cadre 72 en couleur entourant la zone principale de commande activée 60. Ainsi, l'opérateur est toujours informé de la tâche active affichée sur l'écran.

Par ailleurs, l'écran tactile 47 comprend en haut une troisième région 100, distincte des première 49 et deuxième 80 régions, qui est réservée à l'affichage d'une information relative à une zone principale de commande, activée par l'opérateur.

A droite de cette région 100, en dessus de la région 80, est délimitée une zone 102 d'affichage de l'heure courante.

Le reste de l'écran tactile 47, la région 104, qui est entourée par les régions 100, 80 et 49, est destiné en priorité à l'affichage d'informations relatives au contrôle d'une tâche contrôlée par les moyens 39 lorsqu'une zone principale de commande associée à cette tâche a été activée par l'opérateur.

Avantageusement, lorsqu'aucune zone secondaire de commande n'est associée à une tâche spécifique activée par une zone principale de commande, la zone 104 est agrandie et comprend en outre la région 80.

On décrit ci-après différents exemples de fonctionnement du dispositif 9 avec l'écran tactile 47.

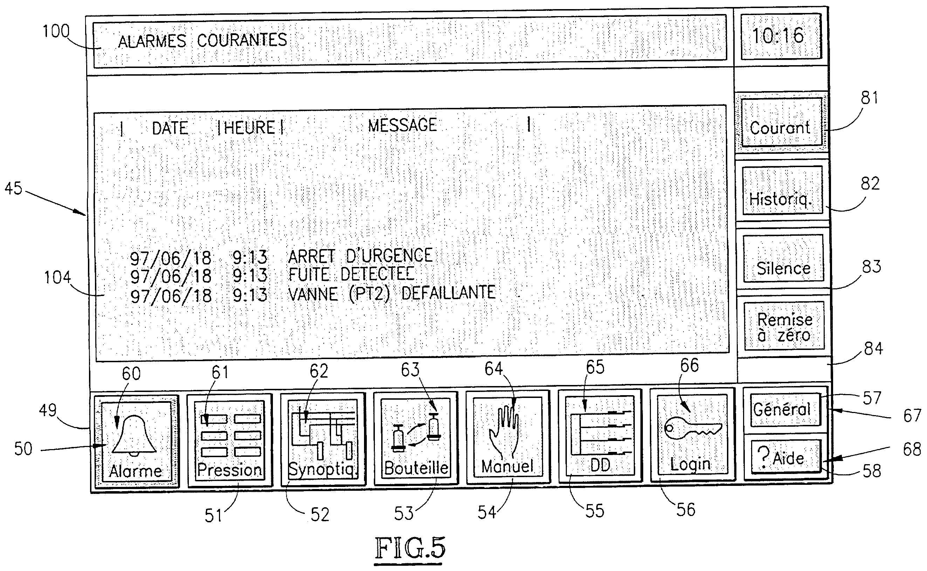

Par exemple sur la figure 4, le graphique 50 montre une cloche en dessous de laquelle est marqué "alarme", et délimite la zone principale de commande 60 relative à une tâche de gestion et d'affichage des alarmes contrôlée par les moyens 39 comme cela a été décrit ci-dessus. L'activation de la zone 60 par un opérateur provoque l'affichage dans la zone 104 de l'écran tactile 47 des alarmes relevées, comme cela est représenté sur la figure 5.

De plus, des graphiques 81 à 84 délimitant des zones 91 à 94 de commandes secondaires relatives à la gestion et à l'affichage des alarmes sont affichés sur l'écran. Par exemple l'activation de la zone secondaire 92 délimitée par le graphique 82 permet l'affichage d'un historique d'alarmes.

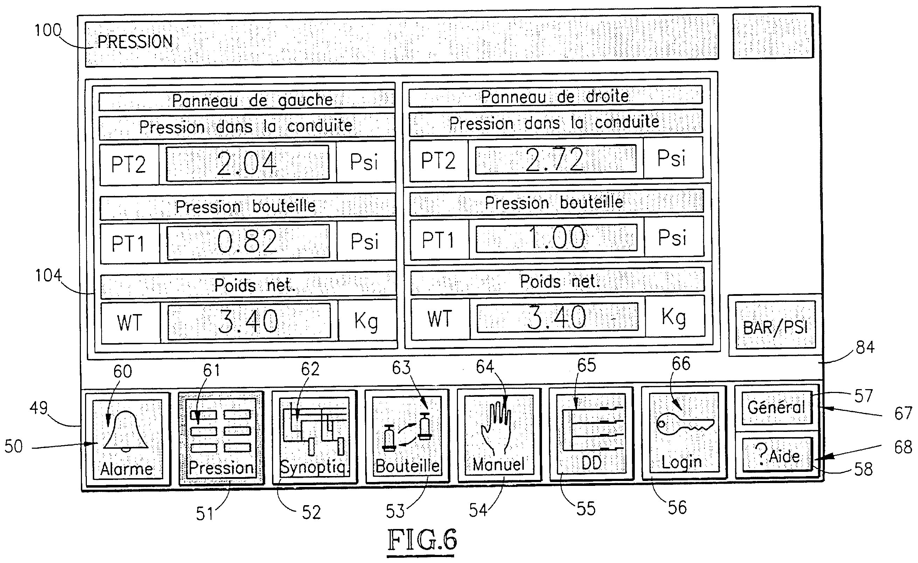

Le graphique 51 de la figure 4 montre des affichages avec des chiffres en dessous desquels est marqué "pression". Ce graphique 51 délimite la zone 61 principale de commande associée à l'activation d'une tâche relative au relevé des valeurs de pression et de poids mesurées par les capteurs 31 et les balances 33, et à l'affichage de ces valeurs sur l'écran tactile 47 comme cela est montré sur la figure 6.

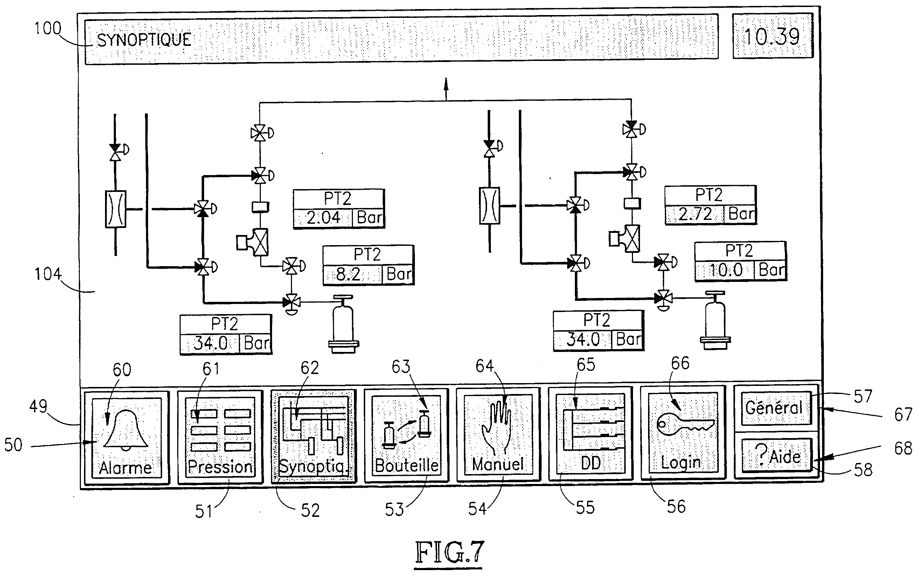

Le graphique 52 de la figure 4 montre des canalisations et des bouteilles reliées à celles-ci en dessous desquelles est marqué "synoptique". Ce graphique 52 délimite la zone principale de commande 62 associée à l'activation d'une tâche relative au relevé des valeurs de mesure mesurées par les capteurs 31 et les balances 33 et à l'affichage sur l'écran tactile d'un schéma synoptique du dispositif, enregistré dans les moyens 48 de mémorisation, conjointement avec les valeurs de mesure relevées, comme cela est montré sur la figure 7.

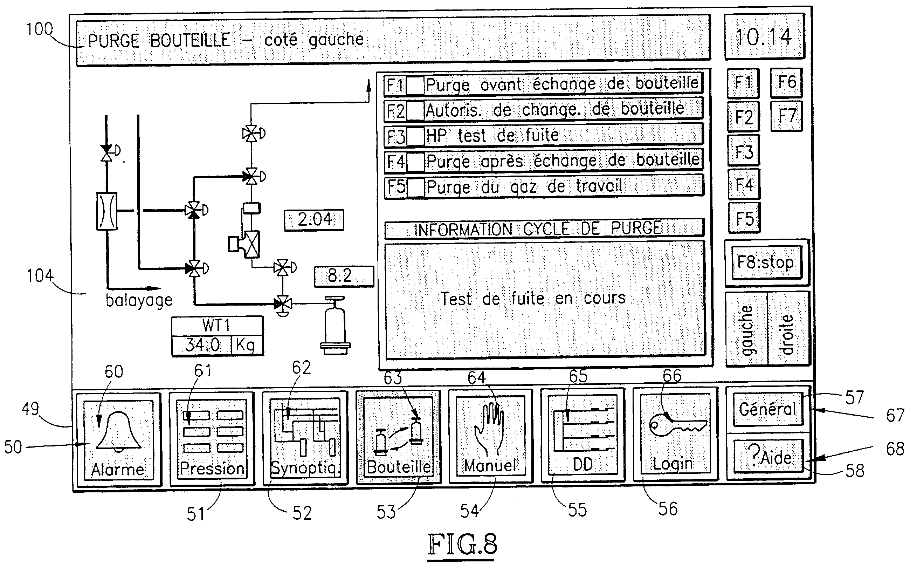

Le graphique 53 de la figure 4 montre une installation de fourniture de gaz (un "gas cabinet") avec des bouteilles et des flèche signifiant un remplacement de bouteilles, en dessous desquelles est marqué "bouteilles". Ce graphique 53 délimite la zone principale de commande 63 associée à l'activation de deux tâches. Une de ces tâches est relative à des commandes des vannes pour effectuer des cycles de purge et des contrôles de fuites nécessaires avant et après chaque remplacement d'une bouteille vide par une bouteille pleine. L'autre tâche est relative aux commandes des vannes disposées dans les canalisations pour assurer le basculement d'une alimentation du dispositif de distribution 9 par une des bouteilles 5 ou 7 vers une alimentation par l'autre bouteille 7 ou 5. Un exemple des écrans affichés lors de l'activation de la zone 63 est représenté sur la figure 8. Il montre à droite le schéma synoptique de la partie de l'installation 1 concernée par le changement de bouteille, et à gauche les différents cycles de purge et de contrôle des fuites, qui peuvent être activés par l'opérateur par exemple au moyen des zones de commandes secondaires délimitées par de carrées, dans lesquelles sont inscrits les codes F1 jusqu'à F5. Un basculement de l'alimentation peut être effectué par activation des zones de commande dans lesquelles sont inscrites les mentions "gauche" et "droite".

Le graphique 55 de la figure 4 montre des canalisations d'un dispositif de distribution en dessous desquelles est marqué "DD" (pour dispositif de distribution). Ce graphique 55 délimite la zone principale de commande 65 associée à l'activation d'une tâche relative à l'évaluation des valeurs de mesure relevées par les capteurs 31A du dispositif de distribution 9A disposé en série avec le dispositif 9 de l'installation 1, et à l'affichage sur l'écran tactile d'un schéma synoptique du dispositif 9A, enregistré dans les moyens 48 de mémorisation, conjointement avec les valeurs de mesure relevées par les capteurs 31A.

Par les exemples décrits, on voit que l'utilisation de l'écran tactile 47 dans le cadre des dispositifs de distribution d'un gaz de travail et d'installations de fourniture d'un tel gaz équipées de ces dispositifs facilite sensiblement le travail des opérateurs chargés de leur surveillance et permet de les dispenser d'une formation longue et coûteuse.

## Revendications

1. Installation de fourniture d'un gaz de travail munie d'une enceinte d'isolation (3) et d'une porte (3') pivotant autour d'un axe vertical (X) pour permettre l'ouverture et la fermeture de ladite enceinte (3), comprenant au moins une source (5, 7) d'un gaz de travail sous pression, disposée dans l'enceinte d'isolation (3), et comprenant un dispositif de distribution (9) d'un gaz de travail, comprenant un ensemble de canalisations (15, 21, 23), relié à au moins une source (5, 7) de gaz de travail et à au moins une canalisation de sortie (10, 10A) pour acheminer le gaz de travail vers un poste de consommation (10B), des organes fonctionnels (25, 25A), notamment des vannes (27, 29, 27A, 29A) disposées dans les canalisations (15, 21, 23) et servant à réguler le flux du gaz de travail dans celles-ci, ainsi que des détecteurs (34, 34A) de fuites de gaz, et une unité de contrôle-commande (35, 35A) comprenant des moyens (37) de communication avec lesdits organes fonctionnels (35, 35A), des moyens (39) de contrôle de tâches relatives auxdits organes fonctionnels (25, 25A), et des moyens (45) de pilotage des moyens de contrôle (39), actionnables par un opérateur du dispositif de distribution (9, 9A), lesdits moyens de pilotage (45) comprenant un écran tactile (47) présentant des zones de commande (60, 61, 62, 63, 64, 65, 66, 67, 68) associées au contrôle de tâches correspondantes, **caractérisée en ce que** ledit écran tactile est fixé sur un boitier (47A) intégré dans la porte (3'), ledit boitier (47A) étant apte à et conçu pour pivoter autour d'un axe vertical (Y).

2. Installation selon la revendication précédente **caractérisée en ce que** l'écran tactile (47) présente des zones principales de commande (60, 61, 62, 63, 64, 65, 66, 67, 68) associées au contrôle de tâches correspondantes, lesquelles zones principales de commande (60 à 68) étant délimitées par des graphiques (50 à 58) associés auxdites tâches.

3. Installation selon l'une des revendications précédentes, **caractérisée en ce que** l'écran tactile (47) comprend pour au moins une zone principale de commande (60; 61; 62; 63; 64; 65; 66; 67; 68) au moins une zone secondaire de commande (91,92,93,94), associée à ladite au moins une zone principale (60; 61; 62; 63; 64; 65; 66; 67; 68) et relative à une instruction pour le contrôle de la tâche correspondant à ladite au moins une zone principale de commande (60; 61; 62; 63; 64; 65; 66; 67; 68), ladite au moins une zone secondaire de commande (91, 92, 93, 94) étant délimitée par un graphique (81, 82, 83, 84) associé à ladite instruction et affiché sur ledit écran tactile (47) seulement en cas d'activation de ladite zone principale de commande correspondante (60; 61; 62; 63; 64; 65; 66; 67; 68) par un opérateur.

4. Installation selon l'une des revendications précédentes, **caractérisée en ce que** l'écran tactile (47) comprend une première région (49) réservée exclusivement auxdites zones principales de commande (60 à 68) et une deuxième région (80) distincte de ladite première région (49) et destinée auxdites zones secondaires de commande (91, 92, 93, 94).

5. Installation selon l'une des revendications précédentes, **caractérisée en ce que** l'écran tactile (47) comprend en outre une troisième région (100) distincte desdites première (49) et seconde régions (80), et réservée à l'affichage d'une information relative à une zone principale de commande (60; 61; 62; 63; 64; 65; 66; 67; 68), activée par un opérateur.

6. Installation selon l'une des revendications précédentes, **caractérisée en ce que** les moyens de pilotage (45) comprennent de plus des moyens de signalisation (70), sur l'écran tactile (47), d'une zone de commande activée (60; 61; 62; 63; 64; 65; 66; 67; 68, 91, 92, 93, 94) par un opérateur.

7. Installation selon l'une des revendications précédentes, **caractérisée en ce qu'**une tâche contrôlée par les moyens de contrôle (39) est relative à la gestion et notamment à l'affichage sur l'écran tactile (47) des alarmes détectées par les organes fonctionnels (25, 25A), et **en ce qu'**une (60) des zones principales de commande de l'écran tactile est une zone d'activation de l'affichage des alarmes relevées.

8. Installation selon l'une des revendications précédentes, munie de capteurs de mesure (31), notamment des pressions régnant dans les canalisations (15), **caractérisée en ce qu'**une tâche contrôlée par les moyens de contrôle (39) est relative à l'évaluation des valeurs de mesure relevées par lesdits capteurs de mesure (31) et à l'affichage de celles-ci sur l'écran tactile (47), et **en ce qu'**une (61) desdites zones principales de commande est une zone d'activation de l'affichage sur l'écran tactile des valeurs de mesure relevées.

9. Installation selon l'une des revendications précédentes, munie de capteurs de mesure (31), notamment des pressions régnant dans les canalisations, **caractérisée en ce que** les moyens de pilotage (45) comprennent des moyens de mémorisation (48) d'un schéma synoptique représentant le dispositif de distribution (9) du gaz de travail et les vannes (27, 29) disposées dans celui-ci, **en ce qu'**une tâche contrôlée par les moyens de contrôle (39) est relative à l'évaluation des valeurs de mesure relevées par lesdits capteurs (31) et à l'affichage conjoint sur l'écran tactile (47) du schéma synoptique du dispositif de distribution (9), enregistré dans lesdits moyens de mémorisation (48), et desdites valeurs de mesure relevées par les capteurs (31), et **en ce qu'**une (62) desdites zones principales de commande est une zone d'activation de l'affichage sur l'écran tactile (47) du schéma synoptique avec les valeurs de mesure relevées.

10. Installation selon l'une des revendications précédentes, **caractérisée en ce qu'**elle comprend deux sources (5, 7) de gaz de travail, lesdites sources étant des bouteilles de gaz.

11. Installation selon l'une des revendications précédentes **caractérisée en ce que** les moyens de pilotage (45) sont aptes à et conçus pour être commandés à distance au moyen d'une connexion WIFI par une tablette, un téléphone intelligent ou un ordinateur portable ayant un écran présentant au moins les zones de commande telles que définies dans les revendications précédentes.

12. Installation selon l'une des revendications précédentes, **caractérisée en ce qu'**un bouton d'arrêt d'urgence (B) est fixé audit boitier (47A), ledit boitier étant situé à une hauteur inférieure à 1,70 m en partant du sol.

13. Installation selon l'une des revendications précédentes, **caractérisée en ce que** la taille de l'écran tactile (47) est inférieure à 12 pouces, de préférence inférieure à 6 pouces.

## Patentansprüche

1. Anlage zur Lieferung eines Arbeitsgases, die mit einem Isolationsgefäß (3) und einer um eine vertikale Achse (X) schwenkenden Tür (3') ausgestattet ist, um die Öffnung und der Schließung des Gefäßes (3) zu ermöglichen, umfassend mindestens eine Quelle (5, 7) eines Arbeitsdruckgases, die im Isolationsgefäß (3) angeordnet ist, und umfassend eine Ausgabevorrichtung (9) eines Arbeitsgases, umfassend eine Rohrleitungsanordnung (15, 21, 23), die mit mindestens einer Quelle (5, 7) von Arbeitsgas und mit mindestens einer Ausgangsrohrleitung (10, 10A) verbunden ist, um das Arbeitsgas zu einer Verbrauchsstelle (10B) zu leiten, Funktionsorgane (25, 25A), insbesondere Ventile (27, 29, 27A, 29A), die in den Rohrleitungen (15, 21, 23) angeordnet sind und dazu dienen, den Arbeitsgasstrom in diesen zu regeln, sowie Detektoren (34, 34A) von Gasaustritten, und eine Kontrollsteuereinheit (35, 35A), umfassend Mittel (37) zur Kommunikation mit den Funktionsorganen (35, 35A), Mittel (39) zur Kontrolle von Aufgaben, die sich auf die Funktionsorgane (25, 25A) beziehen, und Mittel (45) zum Lenken der Kontrollmittel (39), die von einem Betreiber der Ausgabevorrichtung (9, 9A) betätigt werden können, wobei die Lenkmittel (45) einen Berührungsbildschirm (47) umfassen, der Steuerzonen (60, 61, 62, 63, 64, 65, 66, 67, 68) aufweist, die mit der Kontrolle entsprechender Aufgaben assoziiert sind, **dadurch gekennzeichnet, dass** der Berührungsbildschirm an einem in der Tür (3') eingebauten Gehäuse (47A) befestigt ist, wobei das Gehäuse (47A) geeignet und gestaltet ist, um sich um eine vertikale Achse (Y) zu drehen.

2. Anlage nach dem vorstehenden Anspruch, **dadurch gekennzeichnet, dass** der Berührungsbildschirm (47) Hauptsteuerzonen (60, 61, 62, 63, 64, 65, 66, 67, 68) aufweist, die mit der Kontrolle entsprechender Aufgaben assoziiert sind, wobei die Hauptsteuerzonen (60 bis 68) von Grafiken (50 bis 58) begrenzt sind, die mit den Aufgaben assoziiert sind.

3. Anlage nach einem der vorstehenden Ansprüche, **dadurch gekennzeichnet, dass** der Berührungsbildschirm (47) für mindestens eine Hauptsteuerzone (60; 61; 62; 63; 64; 65; 66; 67; 68) mindestens eine Nebensteuerzone (91, 92, 93, 94) umfasst, die mit der mindestens einen Hauptzone (60; 61; 62; 63; 64; 65; 66; 67; 68) assoziiert ist und sich auf eine Anweisung zur Kontrolle der Aufgabe, die der mindestens einen Hauptsteuerzone (60; 61; 62; 63; 64; 65; 66; 67; 68) entspricht, bezieht, wobei die mindestens eine Nebensteuerzone (91, 92, 93, 94) von einer Grafik (81, 82, 83, 84) begrenzt ist, die mit der Anweisung assoziiert ist und auf dem Berührungsbildschirm (47) nur im Fall einer Aktivierung der entsprechenden Hauptsteuerzone (60; 61; 62; 63; 64; 65; 66; 67; 68) durch einen Betreiber angezeigt wird.

4. Anlage nach einem der vorstehenden Ansprüche, **dadurch gekennzeichnet, dass** der Berührungsbildschirm (47) einen ersten Bereich (49) umfasst, der ausschließlich für die Hauptsteuerzonen (60 bis 68) vorbehalten ist, und einen zweiten Bereich (80), der sich vom ersten Bereich (49) unterscheidet und für die Nebensteuerzonen (91, 92, 93, 94) vorgesehen ist.

5. Anlage nach einem der vorstehenden Ansprüche, **dadurch gekennzeichnet, dass** der Berührungsbildschirm (47) weiter einen dritten Bereich (100) umfasst, der sich vom ersten (49) und zweiten Bereich (80) unterscheidet und zur Anzeige einer Information vorbehalten ist, die sich auf eine von einem Betreiber aktivierten Hauptsteuerzone (60; 61; 62; 63; 64; 65; 66; 67; 68) bezieht.

6. Anlage nach einem der vorstehenden Ansprüche, **dadurch gekennzeichnet, dass** die Lenkmittel (45) weiter Signalisierungsmittel (70), auf dem Berührungsbildschirm (47), einer von einem Betreiber aktivierten Steuerzone (60; 61; 62; 63; 64; 65; 66; 67; 68, 91, 92, 93, 94) umfassen.

7. Anlage nach einem der vorstehenden Ansprüche, **dadurch gekennzeichnet, dass** eine von den Kontrollmitteln (39) kontrollierte Aufgabe sich auf die Verwaltung und insbesondere auf die Anzeige auf dem Berührungsbildschirm (47) der Alarme bezieht, die von den Funktionsorganen (25, 25A) erfasst werden, und dadurch, dass eine (60) der Hauptsteuerzonen des Berührungsbildschirms eine Aktivierungszone der Anzeige der erhobenen Alarme ist.

8. Anlage nach einem der vorstehenden Ansprüche, mit Messsensoren (31), insbesondere von Drücken, die in den Rohrleitungen (15) herrschen, ausgestattet, **dadurch gekennzeichnet, dass** eine von den Kontrollmitteln (39) kontrollierte Aufgabe sich auf die Bewertung der von den Messsensoren (31) erhobenen Messwerte und auf die Anzeige dieser auf dem Berührungsbildschirm (47) bezieht, und dadurch, dass eine (61) der Hauptsteuerzonen eine Aktivierungszone der Anzeige der erhobenen Messwerte auf dem Bildschirm ist.

9. Anlage nach einem der vorstehenden Ansprüche, mit Messsensoren (31), insbesondere von Drücken, die in den Rohrleitungen herrschen, ausgestattet, **dadurch gekennzeichnet, dass** die Lenkmittel (45) Speichermittel (48) eines Übersichtsschemas umfassen, das die Ausgabevorrichtung (9) des Arbeitsgases und die in dieser angeordneten Ventile (27, 29) darstellt, dadurch, dass eine von den Kontrollmitteln (39) kontrollierte Aufgabe sich auf die Bewertung der von den Messsensoren (31) erhobenen Messwerte und auf die gemeinsame Anzeige, auf dem Berührungsbildschirm (47) des Übersichtsschemas der Ausgabevorrichtung (9), das in den Speichermitteln (48) aufgezeichnet ist, und der von den Sensoren (31) erhobenen Messwerte bezieht, und dadurch, dass eine (62) der Hauptsteuerzonen eine Aktivierungszone der Anzeige des Übersichtsschemas mit den erhobenen Messwerten auf dem Berührungsbildschirm (47) ist.

10. Anlage nach einem der vorstehenden Ansprüche, **dadurch gekennzeichnet, dass** sie zwei Quellen (5, 7) von Arbeitsgas umfasst, wobei die Quellen Gasflaschen sind.

11. Anlage nach einem der vorstehenden Ansprüche, **dadurch gekennzeichnet, dass** die Lenkmittel (45) geeignet und gestaltet sind, um entfernt mithilfe einer WIFI-Verbindung mit einem Tablet, einem intelligenten Telefon oder einem tragbaren Computer mit einem Bildschirm, der mindestens die in den vorstehenden Ansprüchen definierten Zonen aufweist, gesteuert zu werden.

12. Anlage nach einem der vorstehenden Ansprüche, **dadurch gekennzeichnet, dass** ein Nothalteknopf (B) am Gehäuse (47A) befestigt ist, wobei das Gehäuse ausgehend vom Boden auf einer Höhe von weniger als 1,70 m liegt.

13. Anlage nach einem der vorstehenden Ansprüche, **dadurch gekennzeichnet, dass** die Größe des Berührungsbildschirms (47) kleiner als 12 Zoll, vorzugsweise kleiner als 6 Zoll ist.

## Claims

1. Facility for supplying a working gas provided with an insulating chamber (3) and a door (3') that is pivotable about a vertical axis (X) in order to allow the opening and the closing of said chamber (3), comprising at least one source (5, 7) of a pressurised working gas arranged in the insulating chamber (3), and comprising a device (9) for distributing a working gas, comprising a set of pipes (15, 21, 23) connected to at least one source (5, 7) of working gas and to at least one outlet pipe (10, 10A) in order to convey the working gas to a station where it will be consumed (10B), functional members (25, 25A), in particular valves (27, 29, 27A, 29A), arranged in the pipes (15, 21, 23) and used to regulate the flow of the working gas therein, as well as detectors (34, 34A) of gas leaks, and a monitoring and command unit (35, 35A) comprising means (37) for communicating with said functional members (35, 35A), means (39) for monitoring tasks relating to said functional members (25, 25A), and means (45) for controlling the monitoring means (39) which can be actuated by an operator of the distribution device (9, 9A), said controlling means (45) comprising a touchscreen (47) having command regions (60, 61, 62, 63, 64, 65, 66, 67, 68) associated with monitoring corresponding tasks, **characterised in that** said touchscreen is attached to a housing (47A) built into the door (3'), said housing (47A) being able to and designed to pivot about a vertical axis (Y).

2. Facility according to the preceding claim, **characterised in that** the touchscreen (47) has main command regions (60, 61, 62, 63, 64, 65, 66, 67, 68) associated with monitoring corresponding tasks, which main command regions (60 to 68) being delimited by graphics (50 to 58) associated with said tasks.

3. Facility according to one of the preceding claims, **characterised in that** the touchscreen (47) comprises for at least one main command region (60; 61; 62; 63; 64; 65; 66; 67; 68) at least one secondary command region (91, 92, 93, 94), associated with said at least one main region (60; 61; 62; 63; 64; 65; 66; 67; 68) and relating to an instruction for monitoring the task corresponding to said at least one main command region (60; 61; 62; 63; 64; 65; 66; 67; 68), said at least one secondary command region (91, 92, 93, 94) being delimited by a graphic (81, 82, 83, 84) associated with said instruction and displayed on said touchscreen (47) only in case of activation of said corresponding main command region (60; 61; 62; 63; 64; 65; 66; 67; 68) by an operator.

4. Facility according to one of the preceding claims, **characterised in that** the touchscreen (47) comprises a first region (49) reserved exclusively for said main command regions (60 to 68) and a second region (80) separate from said first region (49) and intended for said secondary command regions (91, 92, 93, 94).

5. Facility according to one of the preceding claims, **characterised in that** the touchscreen (47) further comprises a third region (100) separate from said first (49) and second regions (80), and reserved for displaying an item of information relating to a main command region (60; 61; 62; 63; 64; 65; 66; 67; 68), activated by an operator.

6. Facility according to one of the preceding claims, **characterised in that** the controlling means (45) in addition comprise means for signalling (70), on the touchscreen (47), a command region activated (60; 61; 62; 63; 64; 65; 66; 67; 68, 91, 92, 93, 94) by an operator.

7. Facility according to one of the preceding claims, **characterised in that** a task monitored by the monitoring means (39) relates to the management and in particular to the displaying on the touchscreen (47) of alarms detected by the functional members (25, 25A), and **in that** one (60) of the main command regions of the touchscreen is a region for activating the displaying of the alarms noted.

8. Facility according to one of the preceding claims, provided with sensors (31) for measuring in particular pressures prevailing in the pipes (15), **characterised in that** a task monitored by the monitoring means (39) relates to the evaluation of the measurement values noted by said measuring sensors (31) and to the displaying of these on the touchscreen (47), and **in that** one (61) of said main command regions is a region for activation of the display on the touchscreen of the measurement values noted.

9. Facility according to one of the preceding claims, provided with sensors (31) for measuring in particular pressures in the pipes, **characterised in that** the controlling means (45) comprise means (48) for storing a block diagram representing the device (9) for distributing the working gas and the valves (27, 29) arranged in it, **in that** a task monitored by the monitoring means (39) relates to the evaluation of the measurement values noted by said sensors (31) and to the joint displaying on the touchscreen (47) of the block diagram of the distribution device (9), recorded in said storage means (48), and said measurement values noted by the sensors (31), and **in that** one (62) of said main command regions is a region for activation of the display on the touchscreen (47) of the block diagram with the measurement values noted.

10. Facility according to one of the preceding claims, **characterised in that** it comprises two sources (5, 7) of working gas, said sources being gas cylinders.

11. Facility according to one of the preceding claims, **characterised in that** the controlling means (45) are able to and designed to be commanded remotely by means of a Wi-Fi connection by a tablet, a smartphone or a laptop having a screen having at least the command regions as defined in the preceding claims.

12. Facility according to one of the preceding claims, **characterised in that** an emergency stop button (B) is attached to said housing (47A), said housing being situated at a height less than 1.70m from the ground.

13. Facility according to one of the preceding claims, **characterised in that** the size of the touchscreen (47) is less than 12 inches, preferably less than 6 inches.
